# EUROPEAN PATENT SPECIFICATION

(11) **EP 3 034 198 B1**
(45) Date of publication and mention of the grant of the patent: **22.04.2020**
(21) Application number: 15196791.6
(22) Date of filing: 27.11.2015
(51) Int. Cl.: B22D 11/128, F16D 7/00

(54) **COUPLING ARRANGEMENT FOR AN IDLER ROLL LINE**
KUPPLUNGSANORDNUNG FÜR EINE UMLENKROLLENLEINE
AGENCEMENT DE COUPLAGE POUR UNE LIGNE DE GALET-GUIDE

(30) Priority: 17.12.2014 SE 1451560
(43) Date of publication of application: 22.06.2016
(73) Proprietor: Aktiebolaget SKF, 41 550 Göteborg (SE)
(72) Inventor: Johansson, Mats, SE-426 58 Västra Frölunda (SE); Mitchell, Erik, SE-436 51 Hovås (SE); Elmgren, Stefan, SE-416 59 Göteborg (SE)
(74) Representative: Kuhstrebe, Jochen

(56) References cited:
- EP-A1- 2 300 181
- US-A- 4 485 836

## Description

### Technical field of the invention

The present invention relates to the field of continuous casting of steel. The present invention relates to a coupling arrangement of an idler roll line in a continuous caster. The present invention also relates to an idler roll line for a continuous caster comprising the coupling arrangement.

### Background

Continuous casting is a steel making process wherein molten steel is solidified into a semi-finished slab for subsequent finishing in rolling mills. The molten steel is solidified and formed to the semi-finished slab in a guiding zone consisting of upper roll lines and lower roll lines, which may be either idler roll lines (non-driven) or driven roll lines. A roll line may consist of one or more roll bodies. Typically, the roll lines include a central water system for continuous cooling.

Continuous casting is a demanding process with regard to temperature (as the slab surface temperature is typically in the range of from 900 to 1100 °C), high temperature variations, corrosion (e.g. due to external spray cooling and a large amount of steam in the environment) and debris (e.g. in the form of mechanical wear particles), and thus also demanding for the equipment used in the process.

A slab produced in a continuous caster generally has a size of 2-3 m in width and 0.2-0.3 m in height. At the end of the continuous casting process, the slabs are cut off to a length of about 8-10 m. The peripheral speed of the slab in the guiding zone is about 1-3 meter per minute.

The water cooling system may be of different designs. A conventional system is a through water flow, realized by a central cooling channel where the water flow between the roll bodies is bridged via a sealed water pipe connection. Typically, the type of seals being used is O-rings designed for static sealing.

An alternative conventional system is a returning water flow, without transfer of water between two adjacent roll bodies. The latter system may include Siphon pipes instead of a water pipe connection, and may be used for 1-split roll lines consisting of two roll bodies. However, the former system is the common one for roll lines with further splits (i.e. consisting of three or more roll bodies), as a returning water flow may only efficiently cool the two roll bodies at each end of the roll line.

In order to support the entire width of the slab efficiently, an idler roll line often consists of more than one roll body, such as two, three or four roll bodies. However, there is a problem when the slab does not cover the entire width of the roll line (i.e. not all of the roll bodies), since some of the roll bodies of the roll line then tend to rotate while other roll bodies of the roll line stand still. The stand still may lead to uneven heat transfer to the stand still roll body, thereby causing thermal stress and shortened life time to the overlay of the roll body and to seals therein. Furthermore, seals of the water connection between adjacent roll bodies may wear out, which may lead to water leakage and premature failure of the roll line.

Similar problems may arise if the roll bodies of a roll line have slightly different diameters (such as ± 0.5 %), for example due to manufacturing tolerances and/or uneven wear of the roll bodies. When a slab is guided over the roll line including roll bodies with different diameters, the roll bodies of the roll line consequently tend to rotate with slightly different rotational speeds as the slab forces them to have equal peripheral speed.

Different types of couplings have been suggested for synchronizing the rotational motion of adjacent roll bodies. However, conventional couplings for a roll line typically get worn due to overload caused by the difference in rotational speeds between adjacent roll bodies and result in break-down of the roll line potentially also causing severe effects to the slab.

European patent application no. 2 300 181 A1 discloses a roll line that comprises at least two segment roll lines. The roll line comprises a ring presenting a through-hole, wherein a first and a second adjacent shaft ends of the at least two segment roll lines are at least partly inside the through-hole of the ring, and the first and the second adjacent shaft ends are connected via at least one torque transferring element.

Thus, there is a need in the art for a coupling for an idler roll line presenting an improved service life and a reduced down-time due to maintenance.

### Summary of the invention

It is an object of the present invention to at least partly overcome the problems in the prior art.

The present invention relates to a coupling arrangement allowing for synchronization of adjacent roll bodies in an idler roll line. The coupling arrangement may have an improved durability compared to conventional designs due to its torque-limiting function, enabled by the ability to self-regulation between a so-called locking state and a so-called releasing state.

The synchronization of the rotational motion of adjacent roll bodies in the locking state of the present invention serves to reduce the risk of thermal wear (e.g. thermal stress to the overlay of a roll body) and mechanical wear (e.g. mechanical stress to seals of the central water system), and thereby to improve the service life and to reduce the down-time of the coupling arrangement as well as of the roll line into which it is arranged.

The releasing state of the present invention, reached when the external coupling forces exceeds the internal coupling forces (i.e. the coupling force ratio is equal to or larger than a so-called coupling threshold value), allows for relative motion about the central axis between adjacent roll bodies, and may thereby protect the coupling arrangement towards damage and failure due to a too high level of mechanical stress.

By the term "arranged in connection with" is herein meant that one part is arranged as an integrated part of another part, or alternatively that the one part is a separate part being arranged in connection with, such as adjacent to or in contact with, the other part. A separate part may for instance be arranged in connection with the other part by means of bolts.

By the term "rotably moveable" is herein meant able to rotate about the central axis.

By the term "arranged as a link" is herein meant arranged to functionally interconnect one part with another part.

By the term "locking state" is herein meant the state of the coupling arrangement allowing for synchronized rotational motion of the first component and the second component about the central axis. In the locking state, the coupling arrangement may transmit moment from a first roll body to second roll body, wherein the first and second roll bodies are connected to one of the first component and the second component each.

By the term "releasing state" is herein meant the state of the coupling arrangement allowing for relative rotational motion between the first component and the second component about the central axis. In the releasing state, the coupling arrangement may not transmit moment from a first roll body to a second roll body, wherein the first and second roll bodies are connected to one of the first component and the second component each.

By the term "internal coupling forces" is herein meant the forces that the coupling arrangement exerts on its surrounding, such as selected among friction forces, spring forces, magnetic forces and viscous forces.

By the term "external coupling forces" is herein meant the forces applied to the coupling arrangement from its surrounding, which are counteracting the internal coupling forces. External coupling forces may e.g. be selected among a roller friction torque (i.e. a moment required to rotate an unloaded roll body consisting of friction forces exerted by e.g. seals and bearings of the roll body) and/or a slab friction torque (i.e. a moment depending on the friction force between a roll body and a slab e.g. due to a difference in diameter between two adjacent roll bodies supporting the same slab).

By the term "coupling force ratio" is herein meant the ratio of external coupling forces to internal coupling forces.

By the term "coupling threshold value" is herein meant the value of the coupling force ratio at which the coupling arrangement switches from the locking state to the releasing state. Typically, the coupling threshold value may be equal to or larger than 1.

By the term "synchronized rotational motion" is herein meant that two adjacent roll bodies are moving with the same rotational speed (rpm) about the central axis of the coupling arrangement.

By the term "relative rotational motion" is herein meant that two adjacent roll bodies are moving with different rotational speeds (rpm) about the central axis of the coupling arrangement.

By the term "radially moveable" is herein meant able to move in a direction perpendicular to the extension of the central axis.

By the term "relubrication-free" is herein meant having no need of relubrication during the operation cycle. A relubrication-free coupling arrangement may either be designed to run dry or may only be lubricated before the start of an operation cycle.

The present invention refers to a coupling arrangement of an idler roll line in a continuous caster according to claim 1. The coupling arrangement of the present invention comprises at least a first component and a second component.

According to an aspect of the invention a coupling arrangement of an idler roll line in a continuous caster is provided. The coupling arrangement comprises at least a first component adapted to be arranged in connection with a first roll body of the idler roll line, and a second component adapted to be arranged in connection with a second roll body of the idler roll line. The first component and the second component, respectively, are rotatably moveable about a central axis. The coupling arrangement is switchable between a locking state, allowing for synchronized rotational motion of the first component and the second component about the central axis, and a releasing state, allowing for relative rotational motion between the first component and the second component about the central axis. The switch between the locking state and the realeasing state may be dependent on the coupling force ratio.

The first component is adapted to be arranged in connection with a first roll body of the idler roll line. The first component may be arranged in connection with the first roll body, by forming a separate part being connected to the first roll body e.g. by means of bolts or by forming an integrated part of the first roll body. The first component may for example consist of a drum or a first carrier. The first component may have an annular shape.

The second component is adapted to be arranged in connection with a second roll body of the idler roll line. The second component may be arranged in connection with the second roll body, by forming a separate part being connected to the second roll body e.g. by means of bolts or by forming an integrated part of the second roll body. The second component may for example consist of a carrier, such as a second carrier. The second component may have an annular shape.

Both of the first component and the second component are arranged such that they are moveable in a rotational direction about a central axis of the idler roll line.

For instance, the locking state may be achieved by magnetic forces keeping the first component in a synchronized rotation with the second component about the central axis. This may be enabled by providing a first component comprising a magnetic portion and a second component comprising a complementary magnetic portion. If the coupling arrangement is exposed to external forces being larger than the internal magnetic forces keeping the first component and second component in a synchronized state, the releasing state is reached allowing for relative rotation about the central axis of the first component and the second component, respectively, until the locking state may again be achieved due to a reduced coupling force ratio.

The present invention enables an improved service life of a system into which the coupling arrangement is arranged due to significantly less thermal wear (such as wear of roll body surfaces and housings due to uneven thermal effects) and mechanical wear (such as wear of seals due to uneven mechanical load) of the roll line in general and of the coupling arrangement in particular. Less wear and fewer break-down consequences due to wear further allows for a reduced down-time of the roll line, which is economically favorable.

According to an embodiment, the coupling arrangement further comprises a third component arranged as a link between the first component and the second component. The third component is arranged such that it is moveable with respect to the central axis between the locking state and the releasing state. The third component is in the locking state when the coupling force ratio is smaller than a coupling threshold value, thereby allowing for synchronized rotational motion of the first component and the second component about the central axis. The third component is in the releasing state when the coupling force ratio is equal to or larger than the coupling threshold value allowing for relative rotational motion between the first component and the second component about the central axis.

The movement of the third component is dependent on the ratio of external forces exerted onto the coupling arrangement to internal coupling forces exerted by the coupling arrangement. The third component may be moveable in a radial direction with respect to the central axis or in an axial direction along the central axis, or alternatively, rotatably moveable about the central axis.

When the value of the coupling force ratio of the coupling arrangement is smaller than the coupling threshold value, the third component is arranged in the so-called locking state. In the locking state, a synchronized rotational motion about the central axis of the first component and the second component, respectively, is allowed. Thus, in the locking state, the rotational speed (rpm) of the first component (and hence of the first roll body) is equal to the rotational speed (rpm) of the second component (and hence of the second roll body).

When the value of the coupling force ratio of the coupling arrangement is equal to or larger than the coupling threshold value, the third component is arranged in the so-called releasing state. In the releasing state, a relative rotational motion about the central axis with respect to the first component and the second component, respectively, is allowed. Thus, in the releasing state, the rotational speed (rpm) of the first component (and hence of the first roll body) is not equal, but different, to the rotational speed (rpm) of the second component (and hence of the second roll body).

Provided that the first roll body and the second roll body are both covered by a slab, the peripheral speed (m/s) of the first roll body and the second roll body, respectively, are typically equal in the releasing state.

The coupling arrangement of the present invention manages, on the one hand, to rotate a still standing adjacent roll body (i.e. to overcome the internal forces of a roll body not in motion) and, on the other hand, to not get broken itself during operation. The person skilled in the art will know how to optimize the design of the coupling arrangement within these conditions. Typically, the coupling may be designed to manage forces with are about three times larger than the force needed to rotate a still-standing adjacent roll body. For instance, the force needed to rotate a still-standing adjacent roll body may be about 30 Nm. For instance, the force causing the coupling arrangement to get torn down may be about 60 kNm.

The coupling arrangement allows for a self-regulating system, wherein accumulation of stress and/or torque in the coupling arrangement is avoided and thereby also premature wear of the components of the coupling arrangement as well as of the idler roll line. When the coupling force ratio gets too high, the coupling arrangement moves into its releasing state and reduces the amount of accumulated stress and/or torque. When the coupling force ratio has been reduced, the coupling arrangement once again moves into its locking state and allows for transmission.

The coupling arrangement is flexible in the sense of being able to handle a certain extent of axial, lateral and angular misalignments, respectively, between the end portions of two adjacent roll bodies being interconnected by the coupling arrangement. The coupling arrangement is, on the one hand, able to handle the intended movements between the locking state and the releasing state, and, on the other hand, able to parry conditions set by the system consisting of the entire roll line. Such conditions set by the system may comprise e.g. thermal movements and mechanical movements, respectively, of the components thereof. For example, the coupling arrangement may handle an axial displacement along the extension of the central axis, e.g. due to thermal expansion or contraction of the material of the roll body, in the range of ± 1.5 mm for each adjacent roll body. For example, the coupling arrangement may handle an angular misalignment with respect to the central axis, e.g. due to deflection of the roll body caused by the load from the slab, in the range of ± 0.5° for each adjacent roll body. For example, the coupling arrangement may handle a lateral misalignment perpendicular to the extension of the central axis, e.g. due to tolerances in the manufacturing and arrangement of housings and foundation.

According to an embodiment, the third component is arranged such that it is radially moveable with respect to the central axis between a locking state and a releasing state. According to another embodiment, the third component is arranged such that it is axially moveable with respect to the central axis between a locking state and a releasing state. According to another example, the third component is arranged such that it is rotatably moveable with respect to the central axis between a locking state and a releasing state.

According to an embodiment, the coupling arrangement further comprises guiding means for the third component. The guiding means may be provided on at least one of the first component and the second component.

According to an embodiment, the first component and the second component are annular, and the outer diameter of the second component is smaller than the inner diameter of the first component. This allows for blind axial assembly, which is practical for the mechanician and suitable for minimizing the width of unsupported slab.

According to an embodiment, the third component comprises a resilient element, such as at least one pre-loaded spring.

According to an embodiment, the coupling arrangement is relubrication-free.

According to an embodiment, the third component is an assembly of components consisting of at least one stiff component and at least one resilient component. The resilient component is extendable and contractable in the radial direction with respect to the central axis. Third component is herein arranged at least partly in between the first component and the second component as seen in the axial direction. The switch between the locking state and the releasing state may in this embodiment takes place more or less continuously. The switch between the locking state and the releasing state may in this embodiment be dependent on friction forces of the interacting surface between the first component and the third component. In this embodiment, the third component may be rotabably moveble with respect to the central axis between the locking state and the releasing state.

According to an embodiment, the at least one stiff component consists of a brake shoe and the at least one resilient component consists of at least one pre-loaded spring being extendable and contractable in a radial direction with respect to the central axis. As an example, the brake shoe may be two-parted and two springs may be mounted in parallell, as seen in the radial direction, arranged to connect the two parts of the brake shoe.

According to an embodiment, the third component is an assembly of components consisting of at least one stiff component and at least one resilient component. The resilient component is extendable and contractable in the radial direction with respect to the central axis. The third component is arranged at least partly in between the first component and the second component as seen in the radial direction. The switch between the locking state and the releasing state may in this embodiment take place stepwise (i.e. discontinuously). The switch between the locking state and the releasing state may in this embodiment be dependent on spring forces of the third component. In this embodiment, the third component may be radially moveble with respect to the central axis between the locking state and the releasing state.

According to an embodiment, the third component consists of at least one spring-loaded device, such as at least one ball plunger. The at least one stiff component consists of a cylinder and the at least one resilient component consists of at least one pre-loaded spring being extendable and contractable in a radial direction with respect to the central axis. In an alternative example, the third component consists solely of at least one resilient component, e.g. a pre-loaded spring.

According to an embodiment, the first component is provided with pockets along its inner circumference adapted to receive at least a portion of the third component in the locking state. The second component is provided with guiding means along its outer circumference adapted to hold and guide at least a portion of the third component.

According to an embodiment, the third component further comprises a transmission means arranged at an end portion of the at least one resilient component. The transmission means may e.g. be a ball.

The coupling arrangement is generally limited in size by the design of the idler roll line into which it is adapted to be arranged. In an idler roll line comprising a central water system, the minimum inner diameter of the coupling arrangement is generally limited by the outer diameter of the central water system, such as a water pipe. Typically, the inner diameter of the coupling arrangement is in the range of from 50 mm to 150 mm.

The maximum outer diameter of the coupling arrangement is generally limited by the outer diameter of the adjacent roll bodies, as the slab should preferably be supported by a surface being as smooth as possible. Typically, the outer diameter of the coupling arrangement is in the range of from 180 mm to 350 mm, preferably from 230 mm to 320 mm.

The distance of unsupported slab over the idler roll line should be minimized. Thereby, the width of the coupling arrangement as seen in the axial direction shall be minimized. Typically, the width of the coupling arrangement is less than 50 mm, such in the range of from 10 mm to 40 mm.

Typically, the coupling arrangement according to the present invention, has an operating temperature within the range of from 0 to 200 °C, such as from 50 to 150 °C, typically about 120 °C.

According to an embodiment, an idler roll line for a continuous caster, comprising a coupling arrangement according to the present invention is provided. The first component is connected to a first roll body of the idler roll line and the second component is connected to a second roll body of the idler roll line.

Proposed is also the use of the coupling arrangement according to the present invention in an idler roll line. Alternatively or additionally, the use of the coupling arrangement according to the present invention in a driven roll line is proposed.

### Brief description of the drawings

These and other aspects of the present invention will now be described in more detail, with reference to the appended drawings showing embodiments of the invention.
Figure 1 schematically shows, in perspective, a setup of a continuous caster comprising segments of upper roll lines and lower roll lines. The segments of upper roll lines and lower roll lines comprise driven roll lines and idler roll lines.
Figure 2 schematically shows a coupling arrangement according to a first embodiment of the present invention in a partly exploded perspective view.
Figure 3 schematically shows a coupling arrangement according to a second embodiment of the present invention in a partly exploded perspective view.
Figures 4a-4b, respectively, schematically show the coupling arrangement of the second embodiment having its third component in a releasing state and in a locking state, respectively.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

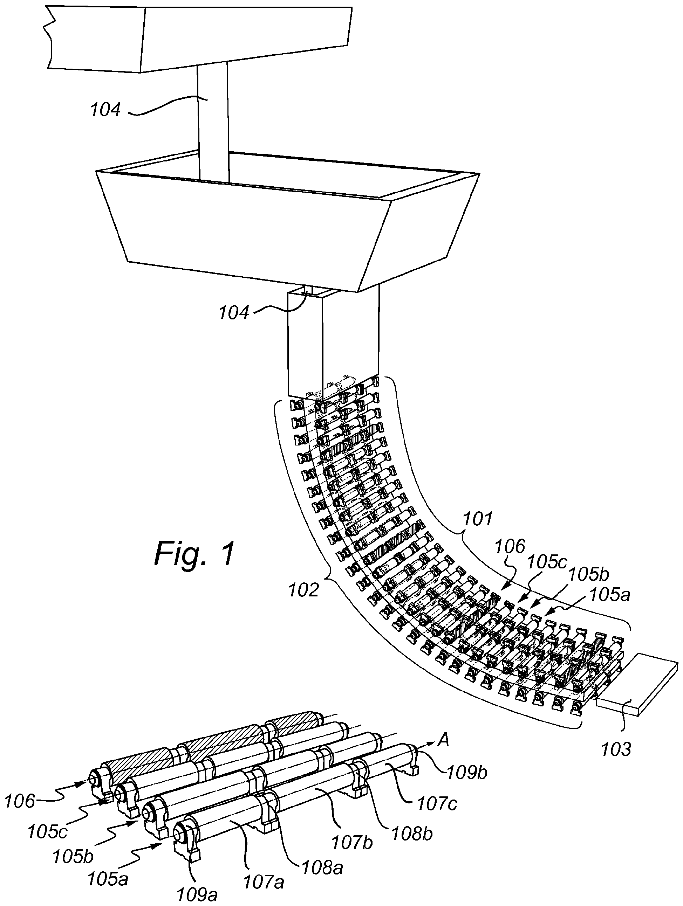

The present invention relates to a coupling arrangement of an idler roll line in a continuous caster. The coupling arrangement comprises at least a first component adapted to be arranged in connection with a first roll body of the idler roll line, and a second component adapted to be arranged in connection with a second roll body of the idler roll line. The first component and the second component, respectively, are rotatably moveable about a central axis. The coupling arrangement is switchable between a locking state, allowing for synchronized rotational motion of the first component and the second component about the central axis, and a releasing state, allowing for relative rotational motion between the first component and the second component about the central axis. The present invention will now be described in more detail with reference to Figures 1-4.

A continuous caster may be used in steel making processes wherein molten steel is solidified into a semi-finished slab for subsequent finishing in rolling mills. The molten steel is solidified and formed to the semi-finished slab as guided throughout the caster.

A continuous caster 100, as shown in Figure 1, comprises segments of upper roll lines 101 and segments of lower roll lines 102. An at least semi-finished slab 103 is formed from molten steel 104 when guided by the upper roll lines 101 and the lower roll lines 102 throughout the continuous caster 100. As shown in Figure 1, the upper roll lines 101 and the lower roll lines 102, respectively, consist of both idler roll lines 105a, 105b, 105c and driven roll lines 106, which are typically arranged in a regular manner in the segments.

An idler roll line may constitute either an upper roll line or a lower roll line in a continuous caster. As shown in Figure 1, an idler roll line 105a may consist of three roll bodies 107a, 107b, 107c. However, the number of roll bodies in the idler roll line may vary from 1 to 10, typically from 2 to 4. In an idler roll line consisting of at least two roll bodies, the roll bodies are typically interconnected in one way or another.

As shown in Figure 1, a first roll body 107a may be connected to a second roll body 107b via a first coupling arrangement according to the present invention (not shown), herein arranged inside two interconnected housings forming a first housing pair 108a. The first housing pair is formed by a housing attached to the first roll body and a housing attached to the second roll body. The housing attached to the first roll body is adapted to hold the first component of the coupling arrangement. The housing attached to the second roll body is adapted to hold the second component of the coupling arrangement.

The second roll body 107b may also be connected to a third roll body 107c via a second coupling arrangement according to the present invention (not shown), herein arranged inside two interconnected housings forming a second housing pair 108b. The second housing pair is formed by a housing attached to the second roll body and a housing attached to the third roll body. The housing attached to the second roll body is adapted to hold the first component of the coupling arrangement. The housing attached to the third roll body is adapted to hold the second component of the coupling arrangement.

If the idler roll line comprises a central water system, the water system (not shown) extends along the central axis A from the first end 109a of the idler roll line 105a (herein, also the first end of the first roll body 107a) to the second end 109b of the idler roll line 105a (herein, also the second end of the third roll body 107c). Thus, the central water system, herein, extends through the three roll bodies 107a, 107b, 107c as well as through the two coupling arrangements (not shown).

In an alternative example, the idler roll line may comprise a separate water system for each roll body. In such an example, the roll bodies of the idler roll line are not connected via the water system, and no water system extends through the coupling arrangement(s). A separate water system is typically both entered and returned at the same end of the roll body, thus either at the first end or the second end of the roll body.

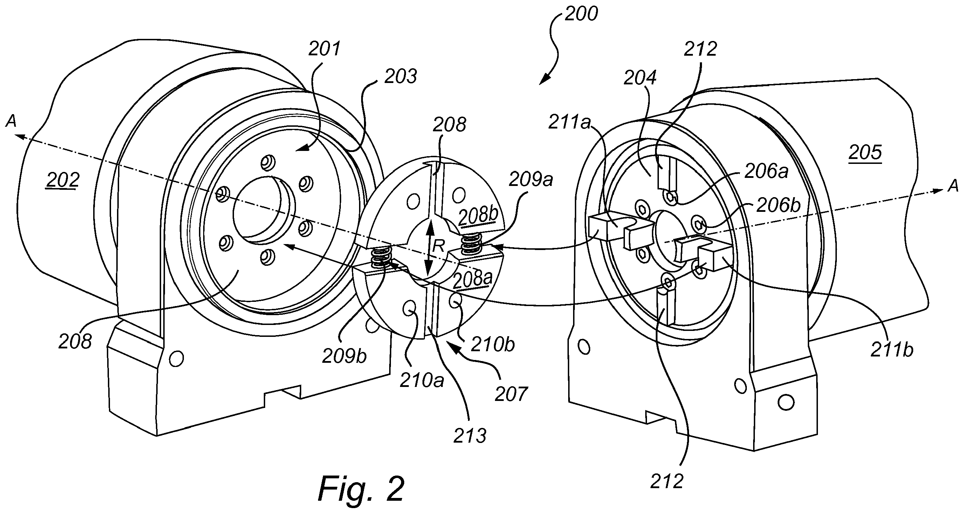

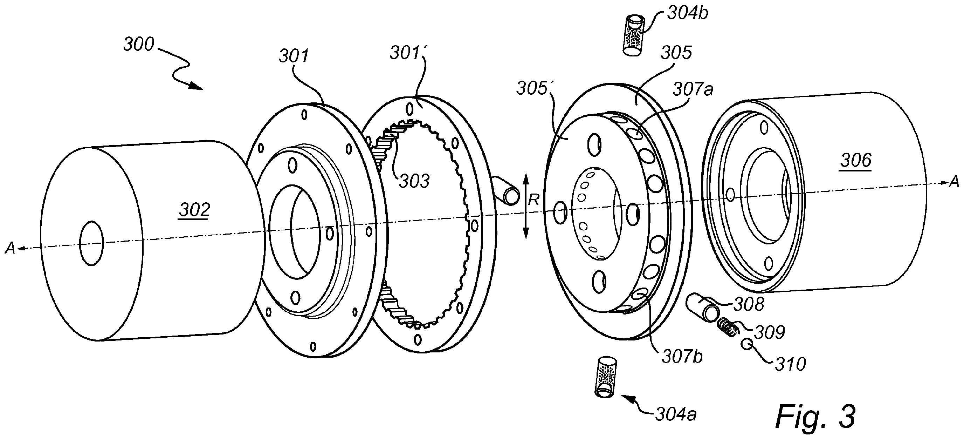

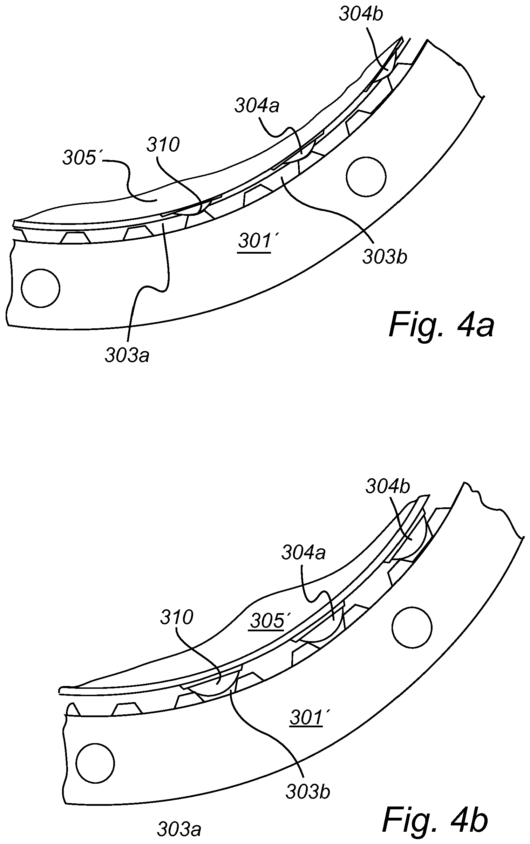

The coupling arrangement may consist of various setups. With reference to Figure 2 and in Figures 3, 4a and 4b, respectively, a first embodiment and a second embodiment of the present invention, respectively, will now be described in more detail.

Figure 2 shows a first embodiment of a coupling arrangement 200 according to the present invention in a partly exploded perspective view. In this first embodiment, the coupling arrangement comprises a first component, a second component and a third component. The third component is herein an assembly of components consisting of two stiff components (i.e. a two-parted brake shoe) and two resilient components (i.e. two pre-loaded springs). The pre-loaded springs are extendible and contractible in the radial direction with respect to the central axis. The third component is herein arranged in between the first component and the second component as seen in the axial direction.

The first component of this embodiment is constituted by a drum 201. The drum 201 is connected to a first roll body 202 by e.g. at least one bolt (not shown herein). The drum 201 comprises a flange 203 arranged at its outer circumference, the flange extends in the axial direction A.

The second component of this embodiment is constituted by a carrier 204. The carrier 204 is connected to a second roll body 205 by at least one bolt 206a, 206b (herein six bolts are shown).

The third component 207 of this embodiment comprises an assembly of a stiff component, herein a brake shoe 208 consisting of two parts 208a, 208b each having a semi-circular shape, and at least one resilient component, herein two preloaded springs 209a, 209b. The resilient component may be any kind of resilient element. The third component 207 is herein arranged in between the drum 201 and the carrier 204 as seen in the axial direction A. The outer circumference of the third component 207 is facing the inner surface of the flange 203. In the locking state, the outer circumference of the third component 207 is frictionally interacting with the inner surface of the flange 203.

The stiff component, herein the brake shoe 208, may further be provided with e.g. through holes 210a, 210b adapted for a tool able to compress the resilient component of the third component during assembly and mounting, and disassembly and dismounting, respectively, of the idler roll line.

The preloaded springs 209a, 209b may herein be contracted and extended in a radial direction R with respect to the central axis A. As seen in Figure 2, the preloaded springs are mounted in parallel between the two semi-circular parts 208a, 208b of the brake shoe 208, thereby ensuring a maintained normal force being exerted on the inner surface of the drum 201 by the third component 207 such that is may move between a releasing state and a locking state. Each spring 209a, 209b may be connected to one of the two semi-circular parts 208a, 208b of the brake shoe 208 in each of its end portions by any suitable means, as shown in Figure 2.The preloaded springs 209a, 209b exerts a relatively constant normal force on the inner surface of the flange 203 of the drum 201, albeit the outer surface of the brake shoe 208 may get worn upon operation.

As shown in Figure 2, the second component may be further provided with guiding means 211a, 211b adapted to guide a third component 207. The guiding means are typically formed to at least partly surround the at least one resilient component to keep it in place and to guide it during movements between the locking state and the releasing state. In the present embodiment, the guiding means 211a, 211b on the carrier 204 are arranged such as to fit the space available about the springs 209a, 209b in between the two parts 208a, 208b of a two-parted brake shoe 208.

The second component, herein the carrier 204, interacts with the third component 207 by driving means 212, herein in the shape of a protrusion of the carrier, adapted to fit a slot 213 of the third component 207. The driving means 212 enables the third component 207 to rotate about the central axis A in the same rotational speed (rpm) as the second component.

The carrier 204 herein has a smaller outer diameter than the drum 201. The carrier 204 is circumferentially surrounded by the flange 203 of the drum 201, thereby decreasing the width of the coupling arrangement as seen in the axial direction A and substantially forming a relatively closed environment between the carrier 204 and the drum 201 for holding the third component 207. Typically, the total width of the third component 207 and of the carrier 204 as seen in the axial direction A are substantially equal to the axial length of the flange 203 of the drum 201, thereby allowing for blind mounting of the idler roll line as seen in the axial direction as well as a minimized axial distance of the idler roll line being unable to support a slab guided thereby.

In the central part of the idler roll line, a central water system, such as a water pipe (not shown), typically having a circular diameter may be arranged. The drum 201, the carrier 204 and the third component 207, all may have an inner diameter, typically a cylindrical diameter, being substantially equal to or slightly larger than the outer diameter of the water pipe.

In the locking state, the friction forces (caused by the normal force exerted by the springs 209a, 209b of the third component 207 on the inner surface of flange 203 of the drum 201 and the friction coefficient of the interacting surface between the outer surface of the third component and the inner surface of the flange) are larger than the counteracting external coupling forces applied onto the coupling arrangement 200 (i.e. coupling force ratio being smaller than the coupling threshold value), thereby allowing the rotational motion of the carrier 204 (and the second roll body 205 to which it is connected) to be transmitted to the drum 201 (and the first roll body 202 to which it is connected) by interaction between the outer circumference of the third component 207 and the inner surface of the flange 203, thereby enabling synchronized rotational motion of the first roll body 202 and the second roll body 205.

In the releasing state, the friction forces are smaller than the counteracting external coupling forces applied to the coupling arrangement 200 (i.e. coupling force ratio being equal to or larger than the coupling threshold value), such that a relative rotational motion between the first roll body 202 and the second roll body 205 is instead enabled.

In practice, the brake shoe 208 starts to slide along the inner surface of the flange 203 of the drum 201 as the external coupling forces applied to the coupling arrangement exceeds the friction forces dependent on the total spring force of the pre-loaded springs 209a, 209b of the third component 207. The brake shoe 208 stops sliding once the friction forces exceed the external coupling forces again. Hence, the third component is arranged such that it is rotatably moveable with respect to the central axis between a locking state and a releasing state. By being dependent on the coupling force ratio, the coupling arrangement may be self-regulating.

Figure 3 shows a second embodiment of a coupling arrangement 300 according to the present invention in a partly exploded perspective view. In this second embodiment, the coupling arrangement comprises a first component, a second component and a third component. The first component is herein provided with pockets along its inner circumference adapted to receive at least a portion of the third component in the locking state. The second component is herein provided with guiding means along its outer circumference adapted to hold and guide at least a portion of the third component. The third component is herein an assembly of components (i.e. a number of ball plungers) each consisting of a stiff component (i.e. a cylinder) and a resilient component (i.e. a pre-loaded spring). The pre-loaded spring is extendible and contractible in the radial direction with respect to the central axis. The third component is herein arranged in between the first component and the second component as seen in the radial direction. The third component herein further comprises a transmission means (i.e. a ball) at an end portion of the pre-loaded spring.

In an alternative embodiment, the third component may consist only of a resilient component and a transmission means, and, hence, no stiff component. In this alternative embodiment, the resilient component and the transmission means are supported by the guiding means.

The first component of this embodiment is constituted by a first carrier 301, herein having the shape of an annular disc. The first carrier 301 is adapted to be connected to a first roll body 302 by e.g. at least one bolt (not shown herein). The first carrier 301 comprises an either integrated or separated part 301' arranged about its outer circumference. The either integrated or separated part 301' comprises pockets 303 adapted to receive a portion of a third component 304a, 304b in the so-called locking state.

The second component of this embodiment is constituted by a second carrier 305, herein having the shape of an annular disc. The second carrier 305 is adapted to be connected to a second roll body 306 by e.g. at least one bolt (not shown herein). The second carrier 305 consists of at least a portion 305' comprising guiding means 307a, 307b adapted to guide and hold at least a portion of a third component 304a, 304b. Herein, the portion comprising guiding means forms an integrated part of the second carrier. Alternatively, the portion comprising guiding means may form a separate part, i.e. it may constitute an intermediate carrier, being connected to the second carrier e.g. by means of bolts or any other suitable means.

The third component 304a, 304b, herein consisting of a number of spring-loaded devices, may be at least partly arranged in the second component 305, 305', such as inside of the guiding means 307a, 307b. The third component is herein arranged in between the first carrier 301, 301' and the second carrier 305, 305' as seen in the radial direction R with respect to the central axis A.

The third component 304a, 304b of this embodiment comprises at least one spring-loaded device, such as a ball plunger. The spring-loaded device consists of a cylinder 308 enclosing a pre-loaded spring 309. The spring brings flexibility to the third component such that is may move between the releasing state and the locking state. The spring is typically provided with a transmission means, such as a ball 310, in one of its end portions. In alternative embodiments, the spring(s) may be substituted by any other kind of resilient element. The cylinder does not necessarily have a circular circumference. The transmission means may have any shape known suitable to the skilled person in the art.

The guiding means 307a, 307b are typically formed to at least partly surround the at least one spring-loaded device to keep it in place and to guide it during movements between the locking state and the releasing state. Herein, the guiding means 307a, 307b has a cylindrical shape and are formed as recesses along the outer circumference of a portion 305' of the second carrier 305. In alternative embodiments, the recesses may have another shape complementary to the third component. The guiding means 307a, 307b are formed to support the major part of the spring-loaded device still allowing the transmission means 310 to be at least partly present in the space available in the radial direction R between the first carrier 301, 301' and the second carrier 305, 305'.

The portion 305' of the second carrier 305 comprising the guiding means 307a, 307b generally has a smaller outer diameter than the either integrated or separated part 301' of the first carrier 301 comprising pockets 303, thereby the portion 305' comprising guiding means 307a, 307b of the second carrier 305 is circumferentially surrounded by the either integrated or separated part 301' comprising pockets 303 of the first carrier 301. Such an arrangement has the advantage of decreasing the width of the coupling arrangement 300 as seen in the axial direction A and substantially forming a relatively closed environment between the first carrier 301 and the second carrier 303 adapted to hold the third component 304a, 304b.

In an alternative embodiment, the first component may be provided with guiding means adapted to guide and hold a third component, and the second component may be provided with an either integrated or separated part arranged about its outer circumference, wherein the either integrated or separated part comprises pockets adapted to receive a portion of a third component in the so-called locking state.

In an alternative embodiment, the coupling arrangement 300 further comprises an additional component being arranged in between the first component and the second component, typically between the pockets and the third component suitably arranged in the guiding means, as seen in the radial direction. The additional component may be a perforated metal sheet.

The spring-loaded devices are typically regularly arranged in the guiding means 307a, 307b about the circumference of one of the first carrier 301 and the second carrier 305. The pockets 303 are typically complementary arranged about the circumference of the other one of the first carrier 301 and the second carrier 305. The arrangement and the design of the pockets and the guiding means for the third component, respectively, may be optimized by a person skilled in the art.

In the central part of the idler roll line, and consequently of the coupling arrangement, a central water system (not shown herein) typically having a circular diameter is arranged. The first carrier 301 and the second carrier 305 have an inner diameter, typically a cylindrical diameter, being substantially equal to or slightly larger than the outer diameter of the water system, such as a water pipe.

The so-called locking state, wherein the spring 309 of the third component, herein the spring-loaded device, is extended in the radial direction R with respect to the central axis A such that a pocket 303 receives the third component, typically the transmission means, e.g. a ball, 310 of the spring-loaded device, and the so-called releasing state, wherein the spring 309 of the third component, herein the spring-loaded device, is contracted in the radial direction R with respect to the central axis A such that the end portion of the third component, typically consisting of the transmission means, e.g. the ball, 310 of the spring-loaded device is in an area between two adjacent pockets 303a, 303b, respectively, are further described in relation to Figures 4a-4b.

In the so-called releasing state, shown in Figure 4a, the spring 309, or an alternative resilient element, of the third component 304a, 304b (herein three ball plungers are partly shown) is contracted due to sufficiently large external coupling forces being applied to the coupling arrangement 300 (i.e. the coupling force ratio being equal to or larger than the coupling threshold value of the coupling arrangement), thereby enabling a relative rotational motion about the central axis A between the first roll body 302 and the second roll body 306. The transmission means 310 of the third component is moved from a first pocket 303a to a second pocket 303b in the releasing state due to that the external coupling forces are large enough to overcome the internal coupling forces keeping the transmission means 310 inside the first pocket 303a (i.e. keeping the third component in the locking state).

In the so-called locking state, shown in Figure 4b, the third component 304a, 304b has its spring 309, or alternative resilient element, in an extended state. This allows for transmission of a rotational motion about the central axis A of the second component 305 (and hence, of a second roll body 306 when connected thereto) to a rotational motion about the central axis A of the first component 301 (and hence, of a first roll body 302 when connected thereto) when the external coupling forces are sufficiently small (i.e. the coupling force ratio being smaller than the coupling threshold value of the coupling arrangement), by interaction between the inner surface of the pockets 303a, 303b, of the first component 301, 301' and the transmission means 310 of the third component 304a, 304b, thereby enabling synchronized rotational motion about the central axis A of the first roll body 302 and the second roll body 306.

The inventors have also suggested using for instance disc clutches, magnets, and/or thrust bearings including a component able to move between a releasing state and a locking state in alternative embodiments of the coupling arrangement of the present invention. A component of the disc clutches, magnets, and/or thrust bearings corresponding to the third component of a coupling arrangement as claimed may be moveable in an axial direction, a radial direction or a rotational direction with respect to the central axis.

To conclude, the present invention relates to a coupling arrangement for synchronization of the rotational motion of adjacent roll bodies in an idler roll line being self-regulating between a locking state and a releasing state, thereby avoiding accumulation of stress and/or torque causing premature wear of the coupling arrangement. Consequently, the coupling arrangement of the present invention allows for an improved service life and a reduced down-time of the coupling arrangement as well as of a roll line and of a continuous caster, respectively, when arranged therein.

Additionally, variations to the disclosed example embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality.

## Claims

1. Coupling arrangement (200; 300) of an idler roll line in a continuous caster, comprising at least
a first component (201, 301) adapted to be arranged in connection with a first roll body (107a) of the idler roll line, and
a second component (204, 305) adapted to be arranged in connection with a second roll body (107b) of the idler roll line,
the first component and the second component (201, 301; 204, 305), respectively, being rotatably moveable about a central axis (A),
**characterized in that** the coupling arrangement is switchable between a locking state, allowing for synchronized rotational motion of the first component and the second component about the central axis, and a releasing state, allowing for relative rotational motion between the first component and the second component about the central axis, wherein the releasing state is reached when a coupling force ratio is equal to or larger than a coupling threshold value, wherein the coupling force ratio is defined by the ratio of external coupling forces to internal coupling forces.

2. Coupling arrangement (200; 300) of an idler roll line in a continuous caster according to claim 1, further comprising
a third component (207;304a, 304b) arranged as a link between the first component (201, 301) and the second component (204, 305),
the third component being arranged such that it is moveable with respect to the central axis (A) between the locking state and the releasing state,
wherein the third component (207; 304a, 304b) is in the locking state when the coupling force ratio is smaller than a coupling threshold value, thereby allowing for synchronized rotational motion of the first component (201, 301) and the second component (204, 305) about the central axis, and
wherein the third component (207; 304a, 304b) is in the releasing state when the coupling force ratio is equal to or larger than the coupling threshold value allowing for relative rotational motion between the first component and the second component about the central axis.

3. Coupling arrangement (200; 300) according to claim 2, wherein the third component (207; 304a, 304b) is arranged such that it is radially moveable with respect to the central axis between a locking state and a releasing state.

4. Coupling arrangement (200; 300) according to any of claims 2 to 3, further comprising guiding means (211a, 211b, 307a, 307b) for the third component (207; 304a, 304b), the guiding means being provided on at least one of the first component (201, 301) and the second component (204, 305).

5. Coupling arrangement (200; 300) according to any of the preceding claims, wherein the first component (201, 301) and the second component (204, 305) are annular, and wherein the outer diameter of the second component (204, 305) is smaller than the inner diameter of the first component (201, 301).

6. Coupling arrangement (200; 300) according to any of claims 2 to 5, wherein the third component (207; 304a, 304b) comprises a resilient element, such as a pre-loaded spring (209a, 209b; 309).

7. Coupling arrangement (200; 300) according to any of the preceding claims, wherein the coupling arrangement is relubrication-free.

8. Coupling arrangement (200) according to any of claims 2 to 7, wherein the third component (207) is an assembly of components consisting of at least one stiff component (208) and at least one resilient component (209a, 209b), the resilient component (209a, 209b) being extendable and contractible in the radial direction (R) with respect to the central axis, and wherein the third component (207) is arranged at least partly in between the first component (201) and the second component (204) as seen in the axial direction.

9. Coupling arrangement (200) according to claim 8, wherein the at least one stiff component (208) consists of a brake shoe (208a, 208b) and the at least one resilient component consists of at least one pre-loaded spring (209a, 209b) being extendable and contractible in a radial direction with respect to the central axis.

10. Coupling arrangement (300) according to any of claims 2 to 7, wherein the third component (304a, 304b) is an assembly of components consisting of at least one stiff component and at least one resilient component, the resilient component being extendable and contractible in the radial direction with respect to the central axis, and wherein the third component is arranged at least partly in between the first component and the second component as seen in the radial direction.

11. Coupling arrangement (300) according to claim 10, wherein the third component (304a, 304b) consists of at least one spring-loaded device, such as at least one ball plunger, wherein the at least one stiff component consists of a cylinder (308) and the at least one resilient component consists of at least one pre-loaded spring (309) being extendable and contractible in a radial direction with respect to the central axis.

12. Coupling arrangement (300) according to claim 10 or 11, wherein the first component is provided with pockets (303, 303a, 303b) along its inner circumference adapted to receive at least a portion of the third component (304a, 304b) in the locking state, and wherein the second component (305) is provided with guiding means (307a, 307b) along its outer circumference adapted to hold and guide at least a portion of the third component (304a, 304b).

13. Coupling arrangement (300) according to any of claims 11 to 12, wherein the third component (304a, 304b) further comprises a transmission means (310) arranged at an end portion of the at least one resilient component.

14. Coupling arrangement according to claim 2, wherein the third component is arranged such that it is axially moveable with respect to the central axis between a locking state and a releasing state.

15. Idler roll line of a continuous caster, comprising a coupling arrangement (200; 300) according to any of the preceding claims, wherein the first component is connected to a first roll body (107a, 202, 302) of the idler roll line and the second component is connected to a second roll body (107b, 205, 306) of the idler roll line.

## Patentansprüche

1. Kupplungsanordnung (200; 300) einer Strangführungsrollenreihe in einer Stranggießvorrichtung, die zumindest Folgendes umfasst:
eine erste Komponente (201, 301), dazu angepasst, in Verbindung mit einem ersten Rollenkörper (107a) der Strangführungsrollenreihe angeordnet zu werden, und
eine zweite Komponente (204, 305), dazu angepasst, in Verbindung mit einem zweiten Rollenkörper (107b) der Strangführungsrollenreihe angeordnet zu werden,
wobei die erste Komponente bzw. die zweite Komponente (201, 301; 204, 305) drehbar um eine mittlere Achse (A) bewegbar sind,
**dadurch gekennzeichnet, dass** die Kupplungsanordnung zwischen einem verriegelten Zustand, der eine synchronisierte rotatorische Bewegung der ersten Komponente und der zweiten Komponente um die mittlere Achse ermöglicht, und einem freigegebenen Zustand, der relative rotatorische Bewegung zwischen der ersten Komponente und der zweiten Komponente um die mittlere Achse ermöglicht, umschaltbar ist, wobei der freigegebene Zustand erreicht wird, wenn ein Kupplungskraftverhältnis gleich einem oder größer als ein Kupplungsschwellenwert ist, wobei das Kupplungskraftverhältnis durch das Verhältnis von externen Kupplungskräften zu internen Kupplungskräften definiert ist.

2. Kupplungsanordnung (200; 300) einer Strangführungsrollenreihe in einer Stranggießvorrichtung nach Anspruch 1, die ferner Folgendes umfasst:
eine dritte Komponente (207; 304a, 304b), angeordnet als eine Verbindung zwischen der ersten Komponente (201, 301) und der zweiten Komponente (204, 305),
wobei die dritte Komponente so angeordnet ist, dass sie bezüglich der mittleren Achse (A) zwischen dem verriegelten Zustand und dem freigegebenen Zustand bewegbar ist,
wobei die dritte Komponente (207; 304a, 304b) im verriegelten Zustand ist, wenn das Kupplungskraftverhältnis kleiner als ein Kupplungsschwellenwert ist,
dadurch synchronisierte rotatorische Bewegung der ersten Komponente (201, 301) und der zweiten Komponente (204, 305) um die mittlere Achse ermöglichend, und
wobei die dritte Komponente (207; 304a, 304b) im freigegebenen Zustand ist, wenn das Kupplungskraftverhältnis gleich dem oder größer als der Kupplungsschwellenwert ist, relative rotatorische Bewegung zwischen der ersten Komponente und der zweiten Komponente um die mittlere Achse ermöglichend.

3. Kupplungsanordnung (200; 300) nach Anspruch 2, wobei die dritte Komponente (207; 304a, 304b) so angeordnet ist, dass sie radial bezüglich der mittleren Achse zwischen einem verriegelten Zustand und einem freigegebenen Zustand bewegbar ist.

4. Kupplungsanordnung (200; 300) nach einem der Ansprüche 2 bis 3, ferner umfassend Führungsmittel (211a, 211b, 307a, 307b) für die dritte Komponente (207; 304a, 304b), wobei die Führungsmittel an zumindest einer aus der ersten Komponente (201, 301) und der zweiten Komponente (204, 305) bereitgestellt sind.

5. Kupplungsanordnung (200; 300) nach einem der vorhergehenden Ansprüche, wobei die erste Komponente (201, 301) und die zweite Komponente (204, 305) ring-förmig sind und wobei der Außendurchmesser der zweiten Komponente (204, 305) kleiner als der Innendurchmesser der ersten Komponente (201, 301) ist.

6. Kupplungsanordnung (200; 300) nach einem der Ansprüche 2 bis 5, wobei die dritte Komponente (207; 304a, 304b) ein elastisches Element, wie etwa eine vorgespannte Feder (209a, 209b; 309), umfasst.

7. Kupplungsanordnung (200; 300) nach einem der vorhergehenden Ansprüche, wobei die Kupplungsanordnung nachschmierungsfrei ist.

8. Kupplungsanordnung (200) nach einem der Ansprüche 2 bis 7, wobei die dritte Komponente (207) eine Anordnung von Komponenten ist, die aus zumindest einer steifen Komponente (208) und zumindest einer elastischen Komponente (209a, 209b) bestehen, wobei die elastische Komponente (209a, 209b) in der radialen Richtung (R) bezüglich der mittleren Achse ausdehnbar und zusammenziehbar ist, und wobei die dritte Komponente (207) zumindest teilweise zwischen der ersten Komponente (201) und der zweiten Komponente (204) angeordnet ist, in der axialen Richtung gesehen.

9. Kupplungsanordnung (200) nach Anspruch 8, wobei die zumindest eine steife Komponente (208) aus einem Bremsschuh (208a, 208b) besteht und die zumindest eine elastische Komponente aus zumindest einer vorgespannten Feder (209a, 209b), die in einer radialen Richtung bezüglich der mittleren Achse ausdehnbar und zusammenziehbar ist, besteht.

10. Kupplungsanordnung (300) nach einem der Ansprüche 2 bis 7, wobei die dritte Komponente (304a, 304b) eine Anordnung von Komponenten ist, die aus zumindest einer steifen Komponente und zumindest einer elastischen Komponente besteht, wobei die elastische Komponente in der radialen Richtung bezüglich der mittleren Achse ausdehnbar und zusammenziehbar ist, und wobei die dritte Komponente zumindest teilweise zwischen der ersten Komponente und der zweiten Komponente angeordnet ist, in der radialen Richtung gesehen.

11. Kupplungsanordnung (300) nach Anspruch 10, wobei die dritte Komponente (304a, 304b) aus zumindest einer vorgespannten Vorrichtung besteht, wie etwa zumindest einem federnden Druckstück, wobei die zumindest eine steife Komponente aus einem Zylinder (308) besteht und die zumindest eine elastische Komponente aus zumindest einer vorgespannten Feder (309) besteht, die in einer radialen Richtung bezüglich der mittleren Achse ausdehnbar und zusammenziehbar ist.

12. Kupplungsanordnung (300) nach Anspruch 10 oder 11, wobei die erste Komponente mit Aussparungen (303, 303a, 303b) entlang ihres inneren Umfangs versehen ist, angepasst zum Aufnehmen zumindest eines Teils der dritten Komponente (304a, 304b) im verriegelten Zustand, und wobei die zweite Komponente (305) mit Führungsmitteln (307a, 307b) entlang ihres äußeren Umfangs versehen ist, angepasst zum Halten und Führen zumindest eines Teils der dritten Komponente (304a, 304b).

13. Kupplungsanordnung (300) nach einem der Ansprüche 11 bis 12, wobei die dritte Komponente (304a, 304b) ferner ein Übertragungsmittel (310) umfasst, das an einem Endteil der zumindest einen elastischen Komponente angeordnet ist.

14. Kupplungsanordnung nach Anspruch 2, wobei die dritte Komponente so angeordnet ist, dass sie axial bezüglich der mittleren Achse zwischen einem verriegelten Zustand und einem freigegebenen Zustand bewegbar ist.

15. Strangführungsrollenreihe einer Stranggießvorrichtung, umfassend eine Kupplungsanordnung (200; 300) nach einem der vorhergehenden Ansprüche, wobei die erste Komponente mit einem ersten Rollenkörper (107a, 202, 302) der Strangführungsrollenreihe verbunden ist und die zweite Komponente mit einem zweiten Rollenkörper (107b, 205, 306) der Strangführungsrollenreihe verbunden ist.

## Revendications

1. Agencement de couplage (200 ; 300) d'une ligne de galet-guide dans une coulée continue, comprenant au moins
un premier composant (201, 301) adapté pour être agencé en connexion avec un premier corps cylindrique (107a) de la ligne de galet-guide, et
un deuxième composant (204, 305) adapté pour être agencé en connexion avec un deuxième corps cylindrique (107b) de la ligne de galet-guide,
le premier composant et le deuxième composant (201, 301 ; 204, 305) étant respectivement mobiles en rotation autour d'un axe central (A),
**caractérisé en ce que** l'agencement de couplage peut être commuté entre un état de blocage, permettant un mouvement rotatif synchronisé du premier composant et du deuxième composant autour de l'axe central, et un état de déblocage, permettant un mouvement rotatif relatif entre l'axe central entre le premier composant et le deuxième composant autour de l'axe central, l'état de déblocage étant atteint lorsqu'un rapport de force de couplage est égal ou supérieur à une valeur seuil de couplage, le rapport de force de couplage étant défini par le rapport des forces de couplage externes aux forces de couplage internes.

2. Agencement de couplage (200 ; 300) d'une ligne de galet-guide dans une coulée continue selon la revendication 1, comprenant en outre
un troisième composant (207 ; 304a, 304b) agencé en tant que lien entre le premier composant (201, 301) et le deuxième composant (204, 305),
le troisième composant étant agencé de telle sorte qu'il est mobile par rapport à l'axe central (A) entre l'état de blocage et l'état de déblocage,
dans lequel le troisième composant (207 ; 304a, 304b) se trouve à l'état de blocage lorsque le rapport de force de couplage est inférieur à une valeur seuil de couplage, permettant ainsi un mouvement rotatif synchronisé du premier composant (201, 301) et du deuxième composant (204, 305) autour de l'axe central, et
dans lequel le troisième composant (207 ; 304a, 304b) se trouve à l'état de déblocage lorsque le rapport de force de couplage est égal ou supérieur à la valeur seuil de couplage permettant un mouvement rotatif relatif entre le premier composant et le deuxième composant autour de l'axe central.

3. Agencement de couplage (200 ; 300) selon la revendication 2, dans lequel le troisième composant (207 ; 304a, 304b) est agencé de telle sorte qu'il est mobile radialement par rapport à l'axe central entre un état de blocage et un état de déblocage.

4. Agencement de couplage (200 ; 300) selon l'une quelconque des revendications 2 et 3, comprenant en outre des moyens de guidage (211a, 211b, 307a, 307b) pour le troisième composant (207 ; 304a, 304b), les moyens de guidage étant prévus sur au moins l'un du premier composant (201, 301) et du deuxième composant (204, 305).

5. Agencement de couplage (200 ; 300) selon l'une quelconque des revendications précédentes, dans lequel le premier composant (201, 301) et le deuxième composant (204, 305) sont annulaires, et dans lequel le diamètre extérieur du deuxième composant (204, 305) est inférieur au diamètre intérieur du premier composant (201, 301).

6. Agencement de couplage (200 ; 300) selon l'une quelconque des revendications 2 à 5, dans lequel le troisième composant (207 ; 304a, 304b) comprend un élément élastique, tel qu'un ressort précontraint (209a, 209b ; 309).

7. Agencement de couplage (200 ; 300) selon l'une quelconque des revendications précédentes, dans lequel l'agencement de couplage est sans regraissage.

8. Agencement de couplage (200) selon l'une quelconque des revendications 2 à 7, dans lequel le troisième composant (207) est un ensemble de composants composés d'au moins un composant rigide (208) et d'au moins un composant élastique (209a, 209b), le composant élastique (209a, 209b) étant extensible et compressible dans la direction radiale (R) par rapport à l'axe central, et le troisième composant (207) étant agencé au moins en partie entre le premier composant (201) et le deuxième composant (204), vu dans la direction axiale.

9. Agencement de couplage (200) selon la revendication 8, dans lequel ledit au moins un composant rigide (208) est un sabot de frein (208a, 208b) et ledit au moins un composant élastique est au moins un ressort précontraint (209a, 209b) qui est extensible et compressible dans une direction radiale par rapport à l'axe central.

10. Agencement de couplage (300) selon l'une quelconque des revendications 2 à 7, dans lequel le troisième composant (304a, 304b) est un ensemble de composants composés d'au moins un composant rigide et d'au moins un composant élastique, le composant élastique étant extensible et compressible dans la direction radiale par rapport à l'axe central, et le troisième composant étant agencé au moins en partie entre le premier composant et le deuxième composant, vu dans la direction radiale.

11. Agencement de couplage (300) selon la revendication 10, dans lequel le troisième composant (304a, 304b) est au moins un dispositif précontraint, tel qu'au moins un poussoir à bille, ledit au moins un composant rigide étant un cylindre (308) et ledit au moins un composant élastique étant au moins un ressort précontraint (309) qui est extensible et compressible dans une direction radiale par rapport à l'axe central.

12. Agencement de couplage (300) selon la revendication 10 ou 11, dans lequel le premier composant est muni de poches (303, 303a, 303b) le long de sa circonférence intérieure, adaptées pour recevoir au moins une partie du troisième composant (304a, 304b) à l'état de blocage, et dans lequel le deuxième composant (305) est muni de moyens de guidage (307a, 307b) le long de sa circonférence extérieure adaptée pour tenir et guider au moins une partie du troisième composant (304a, 304b).

13. Agencement de couplage (300) selon l'une quelconque des revendications 11 et 12, dans lequel le troisième composant (304a, 304b) comprend en outre un moyen de transmission (310) agencé à une partie d'extrémité dudit au moins un composant élastique.

14. Agencement de couplage selon la revendication 2, dans lequel le troisième composant est agencé de telle sorte qu'il est axialement mobile par rapport à l'axe central entre un état de blocage et un état de déblocage.

15. Ligne de galet-guide d'une coulée continue, comprenant un agencement de couplage (200 ; 300) selon l'une quelconque des revendications précédentes, le premier composant étant connecté à un premier corps cylindrique (107a, 202, 302) de la ligne de galet-guide et le deuxième composant étant connecté à un deuxième corps cylindrique (107b, 205, 306) de la ligne de galet-guide.
